# EUROPEAN PATENT APPLICATION

(11) **EP 1 669 249 A1**
(43) Date of publication of application: **14.06.2006**
(21) Application number: 04106366.0
(22) Date of filing: 07.12.2004
(51) Int. Cl.: B60R 21/01

(54) **Seat belt warning system for a vehicle**

(71) Applicant: IEE INTERNATIONAL ELECTRONICS & ENGINEERING S.A., 6468 Echternach (LU)
(72) Inventor: Federspiel, Laurent, 5366, Munsbach (LU); Decoster, Yves, 6760, Ethe (BE); Orlewski, Pierre, Dr., 9021, Ettelbruck (LU); Lamesch, Laurent, 4881, Lamadelaine (LU)
(74) Representative: Beissel, Jean

(57) **Abstract**

A seat belt warning system comprises a sensing system associated to a vehicle seat for sensing a seat belt related status with respect to the vehicle seat. A control unit communicates with the sensing system in order to generate a warning signal depending on the seat belt related status determined by the sensing system. The sensing system further comprises a resonant circuit and a modulation circuit, which is associated to the resonant circuit. The control unit comprises an electromagnetic induction transmitting circuit and an electromagnetic induction receiving circuit. The modulation circuit is capable of modifying an influence of the resonant circuit on electromagnetic coupling between the transmitting circuit and the receiving circuit in a specific way according to the seat belt related status, which enables the receiving circuit to deliver a signal depending on the seat belt related status to the control unit.

## Description

### Background information

The present invention relates generally to a seat belt warning system and more specifically to a seat belt warning system, which is particularly well suited to be associated with removable vehicle seats.
Today's automotive safety standards require automotive vehicles to be equipped with seat belt warning systems capable of emitting a warning perceptible to the driver if e.g. a vehicle passenger has forgotten to fasten the seat belt associated to the occupied vehicle seat. While until now those seat belt warning systems where mainly associated with the front seats of the vehicle, future standards will require that also rear seat be equipped with such seat belt reminder systems.
Seat belt warning systems typically comprise a sensing system associated with a vehicle seat for determining a seat belt related status with respect to said vehicle seat. The sensing system communicates with a control unit, which is capable of processing the signals received from the sensing system. According to the seat belt related status, the control unit determines whether the seat belt related status requires a warning to be emitted and, if this is the case, issues a corresponding warning signal.
One drawback of the known seat belt warning systems lies in the fact, that the sensing system has to be physically connected to the control unit by means of connection wires in order to be functional. This need for physically connecting the sensing system to the control unit however causes problems especially in cars equipped with a flexible seating system with removable and/or displaceable back seats.

### Object of the invention

The object of the present invention is to provide a seat belt warning system, which is suitable for association with removable vehicle seats. This is achieved by a seat belt warning system as claimed in claim 1.

### Summary of the Invention

In order to achieve the above-mentioned object, a seat belt warning system, comprises a sensing system associated to a vehicle seat for sensing a seat belt related status with respect to the vehicle seat. A control unit communicates with the sensing system in order to generate a warning signal depending on the seat belt related status determined by the sensing system. According to an important aspect of the invention, the sensing system comprises a resonant circuit and a modulation circuit, which is associated to the resonant circuit. On the other hand, the control unit comprises an electromagnetic induction transmitting circuit and an electromagnetic induction receiving circuit. The modulation circuit is adapted for modifying an influence of the resonant circuit on electromagnetic coupling between the transmitting circuit and the receiving circuit in a specific way depending on the seat belt related status, which enables the receiving circuit to deliver a signal depending on the seat belt related status to the control unit.

In the present invention, the modulation circuit modifies the influence of the resonant circuit on the electromagnetic coupling between the transmitting and the receiving circuit of the control unit in a specific, predetermined way. An electromagnetic signal, originating from the transmitting circuit and radiated to the receiving circuit is subject to modifications due to the presence of the resonant circuit in the sensing system. The modulation circuit associated with the resonant circuit is able to alter the influence of the latter on the electromagnetic signal detected by the receiving circuit. This is done in a predetermined way in response to the sensing system, so that the control unit can identify the seat belt related status sensed by the sensing system.

The skilled person will be aware of the fact that the resonant electric circuit and the modulating electric circuit can be connected in series or in parallel. The resonant circuit itself may be a parallel resonant circuit, comprising an induction coil and a capacitor in parallel, or a serial resonant circuit, comprising an induction coil and a capacitor in series.

It will be appreciated that the sensing system is powered by the electromagnetic query signal emitted by the control unit. In that sense, the system can be considered as a passive system. It will, however, be appreciated that the sensing system may comprise means for storing at least for a short time the energy received from the control unit, e.g. a rectification circuit and a capacitor or a rechargeable battery. A part of the electromagnetic energy contained in the query signals is used to read the seat belt related status and produce the modifications of the electromagnetic signal that is received by the receiving circuit.

The seat belt warning system is particularly well suited for removable seats, as there is no need for providing wiring between the control unit and the sensing system associated with the vehicle seat. The sensing system can e.g. be positioned between the seat cover and the seat foam or integrated into the seat cushion of the seating portion or the backrest of the vehicle seat. It is also possible to integrate some parts of the sensing system in the seating portion of the seat and other parts in the backrest.

The driver or any passenger present in the vehicle can be informed by means of a warning issued by the control unit, e.g. by optical, audible or tactile signals from an appropriate warning device, according to the detected seat belt related status.

In a preferred embodiment of the invention, the sensing system comprises a seat occupancy detector for determining a seat occupancy status of the vehicle seat and a seat belt fastening detector for determining a seat belt usage condition. Both sensors are electrically connected to the modulation circuit. The seat belt warning system thus is able to detect a passenger or an object on the vehicle seat and the associate seat belt usage condition. The occupancy status and the seat belt usage condition may be transmitted sequentially to the control unit, but preferably, the detectors are coupled so as to provide a single seat belt related status signal depending on the seat occupancy status and said seat belt usage condition.

The person skilled in the art will appreciate a serial arrangement of resonant circuit and modulation circuit, with a serial arrangement of the seat occupancy detector and the seat belt fastening detector. When the seat belt fastening detector detects an uncritical situation, it may interrupt the circuit, preventing the resonant circuit from coupling to the electromagnetic query signal emitted by the transmitting circuit. As the seat belt condition is uncritical, checking the presence of a passenger may be omitted. If, however, the seat belt fastening detector detects a critical condition, which requests a warning to be emitted if a certain occupancy status is met, the resonant circuit may influence the electromagnetic query signal in accordance with the modulation circuit, in response to the occupancy sensor.

The seat occupancy sensor advantageously comprises a foil-type pressure sensor. A foil-type pressure sensor usually comprises two carrier foils, which are arranged at a certain distance by means of a spacer. In an active area of the foil-type pressure sensor, the resistance between two electrodes varies according to the amount of external pressure applied; an active area may for example act as a pressure-activatable switch or as a pressure-depending resistor. Such a pressure sensor is preferably integrated into the seating portion of the vehicle seat. A passenger seated on the vehicle seat thus can be detected be the pressure or the pressure profile exerted on the seating surface. A further advantage of a foil-type pressure sensor is that the resonant circuit may be applied on a foil of the pressure sensor, e.g. by printing with conductive ink. The skilled person will be aware of other seat occupancy sensors, which can be used in the sensing system, e.g. a capacitance sensor, which measures the capacitive coupling of at least one electrode to a conductive body.

On the other hand, the seat belt fastening sensor can comprise a seat belt buckle switch sensor. The control unit thus can emit a warning if the seat belt is not correctly buckled. In association with the seat occupancy sensor, reliable determination whether a passenger has not correctly fastened their seat belt is possible.

Further sensors, like a child seat presence and/or detector, seat belt tension detector, a temperature sensor, may be associated to the sensing system and corresponding parameters transmitted to the control unit.

On the side of the control unit, the transmitting circuit and the receiving circuit may be connected to a common antenna, or, alternatively, the transmitting circuit is connected to a transmitting antenna and the receiving circuit is connected to a receiving antenna.

The antenna or the antennas can be arranged in a roof or a floor of a passenger compartment of the vehicle, in of the vehicle seat.

The sensing system may comprise means for emitting an identification signal, which is detectable by the control unit so as to allow identifying the seat to which the seat belt related status belongs.

The fact that the vehicle seat may be an auxiliary child seat will be appreciated as the control unit thus also can sense a seat belt related status of the child seat. A warning may e.g, be provided if a child travelling in the child seat is not correctly restrained by the child seat harness.

In a preferred embodiment, the seat belt warning system comprises a plurality of sensing systems, each of said sensing systems being associated to a respective vehicle seat for sensing a seat belt related status with respect to the vehicle seat. Each sensing system communicates with the control unit, which comprises a plurality of antennas. Each antenna is associated to a vehicle seat and connected to the transmitting circuit and/or the receiving circuit so that the resonant circuit of each sensing system is capable of remotely influencing electromagnetic coupling between the transmitting circuit and the receiving circuit. The receiving circuit thus is enabled to deliver a signal depending on the seat belt related status of each vehicle seat to the control unit.

Each sensing system preferably comprises means for emitting an identification signal, which is detectable by the control unit. This allows the control unit distinguishing the different seats. A seat belt warning may e.g. be dedicatedly provided to the passenger, who has not fastened their seat belt.

### Brief Description of the Drawings

A preferred embodiment of the invention will now be described with reference to the accompanying drawings in which:
Fig. 1: is a to view of a vehicle seat equipped with a sensing system;
Fig. 2: is cross-sectional view along the line A-A of fig. 1;
Fig. 3: is schematic of the seat belt warning system.

### Description of a preferred embodiment

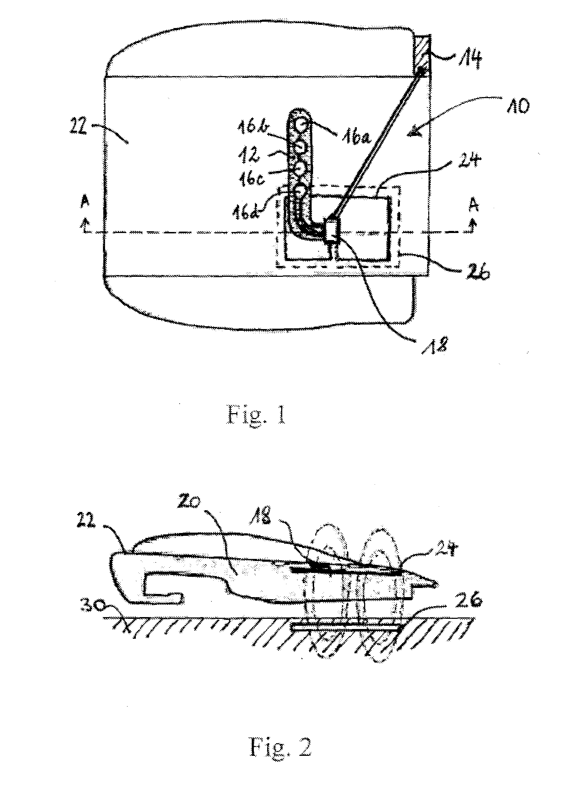

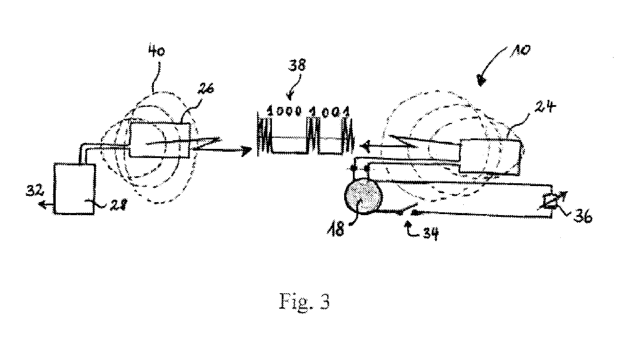

Fig. 1 schematically illustrates the seating portion of a vehicle seat equipped with a sensing system 10 with an occupancy sensor 12 and a seat belt buckle sensor arranged in the seat belt buckle 14. The foil-type occupancy sensor 12 comprises an array of active areas 16a-d, wherein electrodes are arranged. The electrodes are contacted if a certain amount of pressure is applied on the actives areas 16a-d. The resistance between the electrodes then depends on the pressure exerted on the seating surface. The occupancy sensor 12 and the modulation circuit 18, which are electrically connected, are both arranged in the cushion 20 of the seating portion 22. The modulation circuit 18 is also connected to the seat belt buckle 14 and to the resonant electric circuit 24. Depending on the occupancy status and the seat belt buckling status, the modulation circuit 18 allows modifying the electromagnetic coupling between the resonant circuit 24 and a loop antenna 26 of the control unit 28. The loop antenna 26 is arranged underneath the seating portion in the floor 30 of the vehicle compartment (see also fig. 2).

In the present embodiment of the invention, the resonant circuit 24 encircles the modulation circuit 18, but alternatively the resonant circuit 24 may be miniaturised and encapsulated in a common housing together with the modulating circuit 18.

As shown in fig. 3, the loop antenna 26 is electrically connected to a control unit 28 capable of emitting a warning signal 32 if the received seat belt related status requests this. The control unit 28 comprises a transmitting circuit and a receiving circuit (not shown), both connected to the common loop antenna 26. It will be noted that the control unit 28 may be placed in any suitable location of the vehicle.

If more than one seat the vehicle is equipped with a sensing system 10, a loop antenna 26 may be placed in the floor 30 underneath each seat, in the vicinity of the corresponding resonant loop circuit 24 of the sensing system 10. In this case each antenna is connected to the transmitting and the receiving circuit of the control unit 28.

The seat belt buckle switch 34 may be connected in series to the occupancy sensor 12, represented in fig. 3 by a variable resistance 36. If the seat belt is correctly buckled, the seat belt buckle switch 34 is in its open position; the occupancy status thus cannot be read in this situation. Sensing the presence of a passenger may, however, be omitted in the case the seat belt is buckled. As a consequence, the coupling between the transmitting and the emitting circuit is influenced by the resonant circuit 24, but is not affected by the occupancy status if the seat belt is buckled. Nevertheless, the modulating circuit 18 may act on the resonant circuit 24 in a unique manner, so as to enable identification of the vehicle seat wherein the sensing system 10 is arranged. In this case, the sensing system 10 is electronically tagged.

In the case the seat belt is not buckled, the seat belt buckle switch 34 is in the closed position and the emitted query signal 40 causes an oscillatory current in the resonant circuit 24, which is dependent on the modulation imposed by the occupancy sensor 12. The occupancy status is thereby provided to the control unit 28 as the coupling between the transmitting and the receiving circuit reflects the occupancy signal. Based upon this coded information 38, which may also comprise seat identification and measurement values of other sensors, the control unit 28 determines whether the load on the seat is caused by a passenger who has not buckled their seat belt. If the occupancy sensor 12 comprises a plurality of active areas 16a-d, disposed substantially over the entire seating surface of the vehicle seat in a matrix-like arrangement, then a pressure profile can be taken into account. If a passenger is detected, the control unit 28 emits a warning signal 32, informing the driver about the unbuckled seat belt.

The present sensing system 10 is entirely powered by the query signal 40 emitted by the common loop antenna 26 and does not need any further power supply. The front or rear seat wherein the sensing system 10 is integrated thus does not need a plug for connection to the vehicle supply circuit, which enables uncomplicated removal and reinstallation of the seat.

## Claims

1. A seat belt warning system, comprising a sensing system associated to a vehicle seat for sensing a seat belt related status with respect to said vehicle seat and a control unit communicating with said sensing system for generating a warning signal depending on the seat belt related status determined by said sensing system, **characterised in that** said control unit comprises an electromagnetic induction transmitting circuit and an electromagnetic induction receiving circuit and **in that** said sensing system comprises a resonant circuit and a modulation circuit, said modulation circuit being associated to said resonant circuit , said modulation circuit being adapted for modifying an influence of said resonant circuit on an electromagnetic coupling between said transmitting circuit and said receiving circuit in a specific way depending on said seat belt related status.

2. Seat belt warning system according to claim 1, wherein said sensing system comprises a seat occupancy detector for determining a seat occupancy status of said vehicle seat and a seat belt fastening detector for determining a seat belt usage condition.

3. Seat belt warning system according to claim 2, wherein said seat occupancy detector and said seat belt fastening detector are coupled so as to provide a single seat belt related status signal depending on said seat occupancy status and said seat belt usage condition.

4. Seat belt warning system according to claim 2 or 3, wherein said seat occupancy sensor comprises a foil-type pressure sensor and/or a capacitance sensor.

5. Seat belt warning system according to any one of claims 2 to 4, wherein said seat belt fastening sensor comprises a seat belt buckle switch sensor.

6. Seat belt warning system according to any one of claims 1 to 5, wherein said transmitting circuit and said receiving circuit are connected to a common antenna.

7. Seat belt warning system according to any one of claims 1 to 5, wherein said transmitting circuit is connected to a transmitting antenna and said receiving circuit is connected to a receiving antenna.

8. Seat belt warning system according to claim 6 or 7, wherein said antenna is arranged in a roof or a floor of a passenger compartment of said vehicle.

9. Seat belt warning system according to any one of the claims 1 to 8, wherein said sensing system comprises means for emitting an identification signal, which is detectable by said control unit.

10. Seat belt warning system according to any one of the claims 1 to 9, wherein said vehicle seat is an auxiliary child seat.

11. Seat belt warning system according to any one of the claims 1 to 10, comprising a plurality of sensing systems, each of said sensing systems being associated to a respective vehicle seat for sensing a seat belt related status with respect to said vehicle seat, each sensing system communicating with said control unit, wherein said control unit comprises a plurality of antennas, each antenna being associated to a vehicle seat and connected to said transmitting circuit and/or said receiving circuit so that said resonant circuit of each sensing system is capable of influencing electromagnetic coupling between said transmitting circuit and said receiving circuit.

12. Seat belt warning system according to claim 11, wherein each sensing system comprises means for emitting an identification signal, which is detectable by said control unit.
